# DEMANDE DE BREVET EUROPEEN

(11) **EP 3 255 763 A1**
(43) Date de publication de la demande: **13.12.2017**
(21) Numéro de dépôt: 17174542.5
(22) Date de dépôt: 06.06.2017
(51) Int. Cl.: H02K 21/24, H02K 3/26

(54) **MICROGÉNÉRATRICE POUR PIÈCE D'HORLOGERIE ET PROCÉDÉ DE FABRICATION DE MICROGÉNÉRATRICE POUR PIÈCE D'HORLOGERIE**

(30) Priorité: 10.06.2016 CH 7442016
(71) Demandeur: Richemont International S.A., 1752 Villars-sur-Glâne (CH)
(72) Inventeur: Fiaccabrino, Jean-Charles, 1421 Grandevent (CH); Zürcher, Jonathan, 2036 Cormondrèche (CH); Poliakine, Jasha, 2000 Neuchâtel (CH); Civet, Yoan, 74500 Publier (FR); Perriard, Yves, 2002 Neuchâtel (CH)
(74) Mandataire: P&TS SA (AG, Ltd.)

(57) **Abrégé**

Microgénératrice (1) pour pièce d'horlogerie, la microgénératrice (1) comportant un rotor (3) avec au moins un aimant permanent (33, 33') et un stator (2) avec au moins une bobine (21) comportant une déposition de matière conductrice (212, 223) sur un substrat, ledit substrat (210) comportant une portion d'un wafer de silicium .La bobine (21) comporte plusieurs couches de matière conductrices superposées (212, 223) sur ledit wafer en silicium et séparées les unes des autres par une ou plusieurs couches isolantes (217).

## Description

### Domaine technique

La présente invention concerne une microgénératrice pour pièce d'horlogerie et un procédé de fabrication de microgénératrice pour pièce d'horlogerie.

### Etat de la technique

Les montres-bracelets mécaniques sont habituellement régulées au moyen d'un assortiment comportant un spiral et un balancier. La précision qui peut être obtenue à l'aide d'un organe régulateur de ce type est cependant limitée.

Les montres électroniques sont habituellement régulées au moyen d'un oscillateur à quartz. La précision qui peut être obtenue est supérieure à celle des mouvements mécaniques, mais ces montres nécessitent habituellement une batterie qui doit être remplacée périodiquement.

Afin de palier à ces inconvénients, on connait également dans l'état de la technique des montres comprenant un mouvement mécanique régulé par un circuit électronique avec un oscillateur à quartz. L'énergie nécessaire au circuit électronique est fournie par une microgénératrice entraînée par le mouvement.

Ainsi, CH-A-597636 (Ebauches S.A.) propose un mouvement mécanique avec un ressort de barillet et un générateur. Le ressort actionne, par l'intermédiaire d'un rouage, un indicateur horaire et le générateur qui délivre une tension alternative. Le générateur alimente un redresseur qui charge une capacité de stockage afin d'alimenter un oscillateur à quartz ainsi qu'un circuit électronique de réglage. Le circuit électronique de réglage comporte un circuit logique de comparaison et un circuit de dissipation d'énergie relié à la sortie du circuit logique de comparaison, dont l'absorption de puissance peut être commandée par le circuit logique de comparaison. Une entrée du circuit logique de comparaison est reliée avec le circuit de référence et une autre entrée du circuit logique de comparaison est reliée avec le générateur. Le circuit logique de comparaison commande, en fonction du résultat de cette comparaison, l'absorption de puissance par le circuit de dissipation d'énergie et règle de cette façon, au travers du contrôle de l'absorption d'énergie du circuit de réglage, la marche du générateur et de l'indicateur horaire.

Une réalisation similaire est décrite dans EP-A-0239820.

Dans une telle montre, les avantages d'une montre mécanique, c'est-à-dire l'absence de piles, sont combinés avec la précision d'une montre à quartz.

EP0851322, dont le contenu est incorporé par référence, décrit un microgénérateur pour mouvement de montre comportant un stator avec trois bobines connectées électriquement et un rotor muni de régions magnétisées. Les bobines sont disposées de manière asymétrique autour de l'axe du rotor, afin de faciliter le montage. Les bobines sont réalisées à l'aide d'un fil de 12 ou 16 microns dont l'extrémité est soudée sur un circuit imprimé. Les bobines elles-mêmes sont collées dans un logement ménagé dans l'épaisseur du circuit imprimé. Ce processus est fastidieux et l'ensemble est relativement épais.

EP751445, EP1109082, EP1109083, EP0990961 et US6570824 décrivent différents autres exemples de microgénératrices horlogères.

WO2014090830 dont le contenu est incorporé par référence, décrit un générateur horloger muni d'un rotor et d'un stator avec M+N bobines. Un circuit électronique de régulation est agencé pour contrôler le freinage du rotor en agissant différemment sur les M bobines que sur les N autres bobines. Cette solution présente l'avantage de ne freiner que sur N bobines, et de maintenir en permanence au moins M bobines pour alimenter le circuit électronique de régulation, même en période de freinage maximal. On évite ainsi les chutes de tension brusques dues au court-circuitage simultané de toutes les bobines.

US2014062087 décrit une microgénératrice dont le stator comprend des bobines. Une monocouche de matière conductrice est déposée dans chaque bobine.

EP1564864 divulgue un moteur comprenant un stator et rotor. Le stator du moteur comprend un empilement de couches conductrices et isolantes.

FR2146527 décrit un micromoteur électrique dont le stator comprend un bobinage formé de deux plaquettes annulaires recouvertes d'isolant sur lesquelles est déposée par électrodéposition de la matière conductrice pour former un circuit électrique.

EP0287945 divulgue un moteur comprenant un stator constitué d'une bobine disposée sur un isolant, la bobine étant formée par déposition d'une couche unique de conducteur.

US4733115 décrit un moteur électrique comprenant un empilement de couches. Cet empilement comprend notamment une couche de matière conductrice, à savoir une couche de cuivre, et plusieurs couches de photoresist.

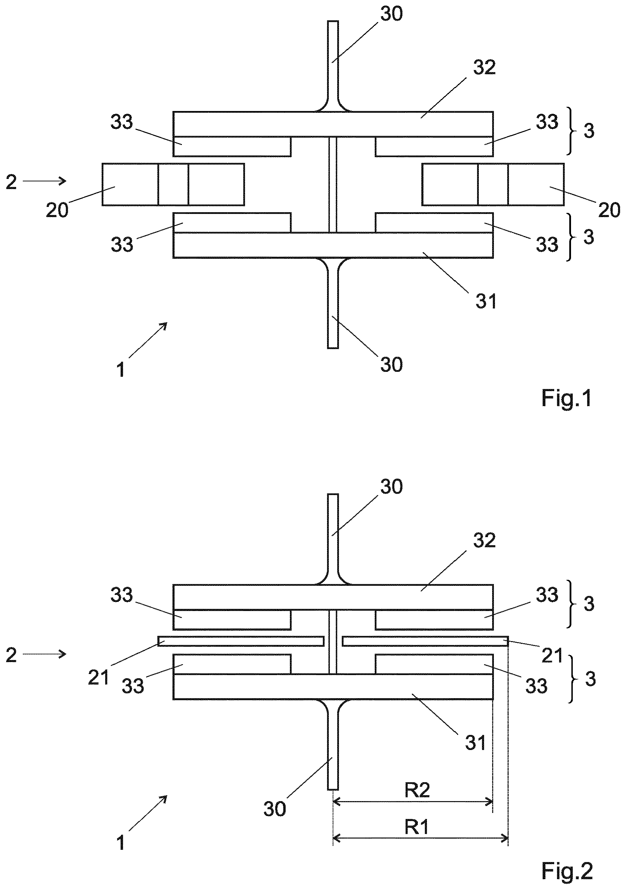

La figure 1 illustre une vue en coupe d'une microgénératrice 1 conventionnelle, employée dans différents mouvements horlogers mécaniques. Dans cet exemple, la microgénératrice 1 comporte un stator 2 et un rotor 3 monté sur un axe 30. Le stator 2 comporte des bobines 20, par exemple trois ou six bobines, réalisées par bobinage d'un fil de cuivre; elles peuvent être montées sur un substrat, par exemple un circuit imprimé, non illustré.

Le rotor 3 comporte deux flasques 31, 32, sur lesquelles des aimants permanents discrets 33 sont montés. Le champ magnétique tournant généré dans les bobines 20 par la rotation des aimants permanents 33 engendre un courant électrique alternatif dans ces bobines, qui peut être redressé pour alimenter un circuit électronique de régulation pour contrôler l'avance du mouvement.

L'épaisseur totale d'une telle microgénératrice est typiquement de l'ordre de 1.5 à 2 mm, ce qui rend son intégration dans l'espace confiné d'un mouvement horloger problématique. Cette épaisseur est notamment déterminée par l'épaisseur des bobines, généralement comprise entre 0,3 et 0,7 mm.

Cette construction conventionnelle présente aussi l'inconvénient d'une distance relativement importante entre les aimants 33 des deux flasques, cette distance étant entre outre nécessaire pour pouvoir garantir une sécurité nécessaire au bon fonctionnement. Il en résulte des flux parasites importants sous forme de flux magnétiques générés par les aimants permanents 33 et qui se referment sans traverser les bobines 20 du stator et l'aimant de la flasque opposée. Ces flux parasites réduisent le rendement de la microgénératrice. Ils peuvent aussi perturber le fonctionnement des autres composants du mouvement.

La réalisation des bobines à partir d'un fil bobiné limite en outre la possibilité de réaliser des bobines de forme quelconque. En effet, le fil conducteur doit avoir une section suffisante pour ne pas se déchirer lors du bobinage, ce qui impose un rayon de courbure relativement important. Il n'est donc pas possible de réaliser des bobines avec des angles vifs ou des rayons de courbure réduits. Il en résulte une occupation non optimale de l'espace en regard des aimants permanents, et des pertes de couplage.

### Bref résumé de l'invention

Un but de la présente invention est de proposer une microgénératrice plus fine et de hauteur précise et/ou à meilleur rendement que les microgénératrices conventionnelles.

Selon l'invention, ces buts sont atteints notamment au moyen d'une microgénératrice pour pièce d'horlogerie selon la revendication principale.

L'utilisation d'une bobine réalisée par déposition, au lieu d'une bobine réalisée par bobinage, permet de réduire l'épaisseur du stator et donc de la microgénératrice. Elle permet aussi de rapprocher les deux flasques rotoriques l'une de l'autre, en particulier en maitrisant précisément la hauteur de la bobine (que l'on peut aussi appeler « épaisseur ») et d'améliorer ainsi le couplage et donc le rendement de la microgénératrice.

Dans un mode de réalisation préféré, la matière conductrice est déposée par voie humide, par exemple par déposition électrochimique ou par dépôt electroless (que l'on peut aussi appeler dépôt chimique). Dans un autre mode de réalisation préféré, la matière conductrice est déposée par voie sèche, comme par exemple PVD, PECVD. La matière conductrice peut être du cuivre, de l'aluminium ou d'autres métaux dont la résistivité électrique est basse, généralement comprise entre 2 * 10^{E}-8 et 6 * 10^{E}-8 Ohm.cm, et préférablement comprise entre 3.5 * 10^{E}-8 et 4 * 10^{E}-8 Ohm.cm.

Dans un mode de réalisation préféré, le substrat est du silicium. Dans un mode de réalisation préféré, le substrat comporte de la céramique, du kapton, ou de manière générale tout support mécaniquement suffisamment rigide pour être utilisé comme substrat et compatible avec la séquence des étapes technologiques à mettre en place pour produire la microgénératrice.

La fabrication des bobines peut impliquer au moins une étape de photolithographie. Alternativement, l'étape de photolithographie peut avantageusement être remplacée par un procédé de déposition additif et localisé, combinant à la fois une étape de déposition et une étape de structuration. Le dépôt d'une encre conductrice par procédé dérivé de l'impression à jet d'encre est une illustration de cette approche.

Afin d'augmenter le nombre de spires et donc le couplage, la bobine, de préférence chaque bobine, peut comporter plusieurs couches de matière conductrices superposées sur un même substrat et séparées les unes des autres par une ou plusieurs couches isolantes.

La couche isolante entre couches superposées peut être une déposition de matériau isolant, par exemple de SiO2 et/ou du SiₓO_{y} et/ou du polyimide et/ou parylène.

Une telle construction permet de réaliser un stator dont l'épaisseur est inférieure à 0,1 mm.

Dans un mode de réalisation préféré, la microgénératrice comporte au moins un pont électriquement conducteur, ou via, pour relier deux couches au travers de ladite couche isolante. Ceci est une possibilité simple et efficace pour assurer une connexion électrique entre les différentes couches.

Dans un mode de réalisation préféré, chaque bobine comporte au moins une spire, la largeur desdites spires étant inférieure à 5 microns, leur espacement étant inférieur à 5 microns, l'épaisseur totale dudit stator étant inférieure à 0,1 mm. Par « espacement » on entend dans ce contexte la distance entre deux segments de lignes voisines de la spire. Dans un mode de réalisation préféré l'épaisseur de la spire est comprise entre 3 et 15 microns, de préférence entre 5 et 10 microns. Idéalement, l'épaisseur de la spire est de 5 microns +/- 10%. De telles dimensions sont particulièrement avantageuses parce qu'elles offrent un bon compromis entre une petite taille de la microgénératrice et un bon fonctionnement de microgénératrice.

Dans un mode de réalisation qui permet de réduire encore l'épaisseur totale, la microgénératrice est munie d'un rotor comprenant deux flasques, une seule desdites flasques étant munie d'aimants permanents. La perte d'efficacité par rapport à une variante munie d'aimants sur les deux flasques est compensée, au moins partiellement, par l'amélioration du couplage obtenu grâce au rapprochement des flasques. Dans un mode de réalisation particulièrement préféré, le rotor comporte une seule flasque. Ceci permet de réduire encore plus l'épaisseur totale de la microgénératrice.

Le stator peut comporter un substrat sur lequel une pluralité de bobines sont superposées et reliées entre elles en parallèle et/ou en série. De préférence, le stator comporte entre 2 et 10 spires superposées, l'épaisseur de chaque spire étant de préférence inférieure à 10 microns. Cette variante permet d'augmenter encore le rendement, et/ou de réduire la résistance des bobines, au prix d'une augmentation d'épaisseur marginale. Dans un mode de réalisation préféré, le substrat comporte au moins une bobine sur chacune de ses faces.

Le gain d'épaisseur obtenu grâce aux bobines peut être exploité par exemple en utilisant des aimants rotoriques plus épais que dans l'art antérieur, ce qui permet d'augmenter le flux magnétique. Dans un mode de réalisation, l'épaisseur du ou de chaque aimant permanent est comprise entre 0,1 et 0,7 mm, de préférence entre 0,2 et 0,5 mm.

Dans un mode de réalisation particulièrement préféré, ledit stator comporte au moins deux dits substrats avec une pluralité de bobines sur chaque substrat, ledit rotor comporte au moins une flasque avec une pluralité d'aimants permanents entre deux substrats.

Dans un mode de réalisation particulièrement préféré, la microgénératrice comporte une pluralité de bobines superposées, chaque bobine comportant un substrat et plusieurs spires empilées sur ce substrat, lesdites bobines étant reliées entre elles en parallèle et/ou en série.

Dans un mode de réalisation particulièrement préféré, lesdites spires ont une forme de segment annulaire. Ceci a pour avantage que plusieurs spires peuvent être arrangées sur le même substrat l'une à côté de l'autre de façon symétrique sans laissant trop de place libre entre les spires.

Dans un mode de réalisation particulièrement préféré, la microgénératrice comporte plusieurs bobines déphasées juxtaposées sur un même substrat. Ceci permet de créer un signal stable et fiable de la microgénératrice tout en minimisant l'épaisseur de la microgénératrice.

Un procédé de fabrication d'une bobine pour une microgénératrice selon l'invention est caractérisée par une étape de déposition sur une portion en silicium d'un substrat de plusieurs couches de matière conductrices superposées et séparées les unes des autres par une ou plusieurs couches isolantes.

Dans un mode de réalisation, la matière conductrice de chaque couche forme plusieurs spires.

Dans un mode de réalisation avantageux, le procédé comporte la réalisation par photolithographie d'un sillon, formant un moule dans lequel ladite matière conductrice est déposée. Le procédé comporte aussi avantageusement au moins une étape de gravure.

Dans un mode de réalisation avantageux, le procédé comporte une réalisation successive de plusieurs couches de bobines superposées par déposition successive de matière conductrice dans plusieurs sillons superposés. Alternativement ou en plus de ceci, le procédé peut aussi comporter une étape pendant laquelle les couches conductrices destinées à former les spires sont déposées dans un premier temps par un dépôt physique (sputtering ou évaporation), ainsi qu'une étape de mise en forme de spires par une gravure sélective à l'aide d'une épargne obtenue par photolithographie.

L'invention concerne également un mouvement de montre comprenant une microgénératrice selon l'invention.

Les modes de réalisation décrits pour la microgénératrice s'appliquent également au procédé et au mouvement de montre, mutatis mutandis.

### Brève description des figures

Des exemples de mise en oeuvre de l'invention sont indiqués dans la description illustrée par les figures annexées dans lesquelles :
- La figure 1 illustre une vue en coupe d'une microgénératrice conventionnelle.
- La figure 2 illustre une vue en coupe d'une microgénératrice selon un premier mode de réalisation de l'invention.
- La figure 3 illustre une vue en coupe d'une microgénératrice selon un deuxième mode de réalisation de l'invention.
- La figure 4 illustre une vue en coupe d'une microgénératrice selon un troisième mode de réalisation de l'invention.
- La figure 5 illustre une vue en coupe d'une microgénératrice selon un quatrième mode de réalisation de l'invention.
- La figure 6 illustre une vue en coupe d'une microgénératrice selon un cinquième mode de réalisation de l'invention.
- La figure 7 illustre la forme d'une bobine vue de dessus.
- Les figures 8A à 8T illustrent différentes étapes d'un procédé de fabrication de bobine selon l'invention.

### Exemple(s) de mode de réalisation de l'invention

La figure 2 illustre une vue en coupe d'une microgénératrice 1 selon un mode de réalisation de l'invention. Elle peut être employée dans un mouvement horloger mécanique afin de convertir l'énergie fournie par le barillet en une énergie électrique pour alimenter un circuit électronique, par exemple un circuit qui régule l'avance de la montre en contrôlant l'impédance de sortie de la microgénératrice. Le circuit électronique décrit dans EP1276024, dont le contenu est incorporé ici par référence, peut être employé à cet effet.

Dans cet exemple, la microgénératrice 1 comporte un stator 2 et un rotor 3 monté sur un axe 30. Le stator 2 comporte des bobines 21, par exemple trois ou six bobines, réalisées par électrodéposition sur un substrat de silicium décrit plus bas.

Le rotor 3 comporte deux flasques 31, 32, sur lesquelles des aimants permanents discrets 33 sont montés. Le champ magnétique tournant généré dans les bobines 21 par la rotation des aimants permanents 33 engendre un courant électrique alternatif dans ces bobines 21, qui peut être redressé pour alimenter le circuit électronique.

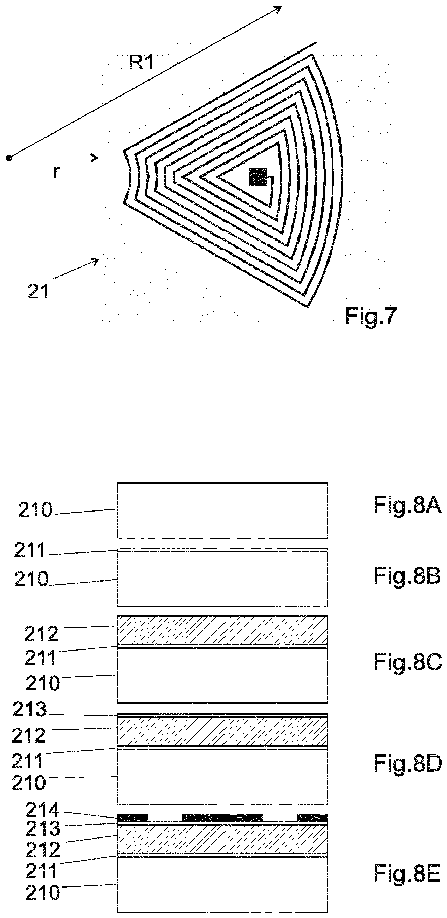

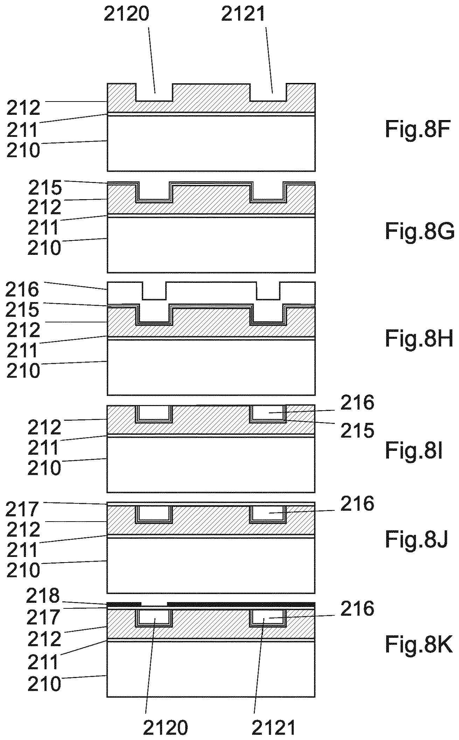

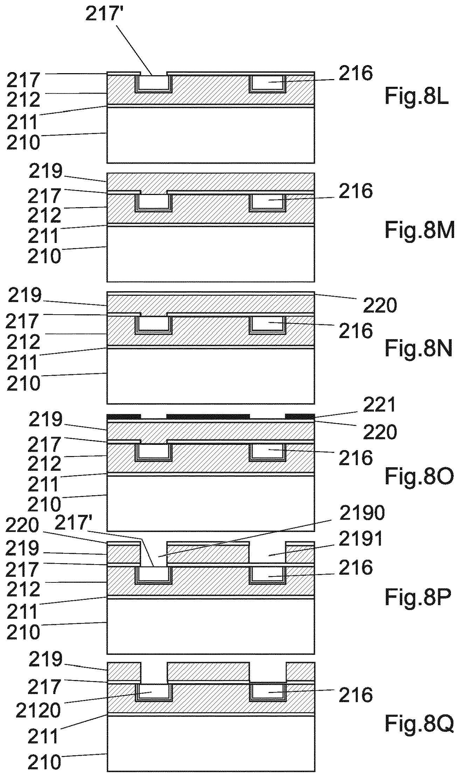

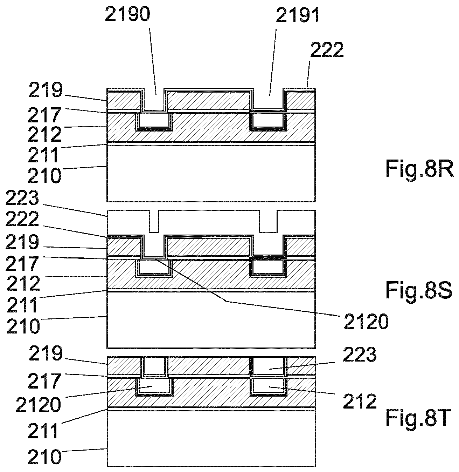

Les bobines 21 sont réalisées par un procédé de fabrication additive décrit plus bas en relation avec la figure 8, et comprenant une étape de déposition sur un substrat. L'épaisseur totale, y compris le substrat, est avantageusement inférieure à 0,1 mm, de préférence inférieure à 0,05 mm. L'espace entre les aimants permanents sur les flasques inférieures 31 et supérieures 32 est ainsi avantageusement inférieur à 0,3mm, de préférence inférieur à 0,25 mm. Il en résulte un meilleur couplage magnétique entre les aimants permanents sur les deux flasques et avec les bobines 21.

Les bobines 21 comportent de préférence un empilement avec plusieurs couches de spires isolées les unes des autres, afin de maximiser le nombre de spires couplées.

Un exemple de bobine 21 vu de dessus est illustré sur la figure 7. La forme de la bobine 21 est en segment annulaire. Cette forme permet de maximiser la surface statorique occupée par les spires en regard des aimants permanents 33. Dans un mode de réalisation, chaque bobine 21 couvre un secteur angulaire de 60°. Six bobines sont arrangées côte-à-côte de manière à former un anneau circulaire. Les différentes bobines constituant le stator peuvent être réalisées sur un seul substrat de silicium, ou sur différents substrats. Le substrat peut être monté sur un support.

Les six bobines 21 peuvent être reliées par paires pour générer trois courants déphasés de 120°, ou par groupe de trois pour générer deux courants déphasés de 180°, ou bien toutes mises en série.

Le rayon interne r des bobines 21 est déterminé par le diamètre de l'axe 30 du rotor, de manière à se rapprocher autant que possible des bords du trou de passage pour cet axe. Le rayon extérieur R₁ est déterminé par le rayon des rotors R₂; comme on le voit sur la figure 2, il dépasse de préférence ce rayon de manière à capter la plus grande partie des flux magnétiques émis par les aimants permanents 33. On veillera toutefois à ne pas augmenter ce rayon au-delà d'une valeur limite considérée comme optimale, et pour laquelle le flux capté est le plus élevé pour une valeur de résistance globale la plus faible. Comme mentionné plus haut, chaque bobine 21 comporte de préférence plusieurs couches de spires superposées, par exemple entre 2 et 50 couches, de préférence entre 3 et 10 couches.

Les spires sont réalisées par électrodéposition et peuvent donc être très fines et très proches les unes des autres. Des essais concluants ont été effectués avec des spires dont la largeur est inférieure à 5 microns, par exemple entre 0,5 et 5 microns, de préférence entre 1 et 4 microns. La distance entre les spires est avantageusement inférieure à 5 microns, par exemple de 2 microns. Ces dimensions réduites permettent de maximiser le nombre de spires sur une surface donnée. Il est cependant nécessaire de conserver une section des spires suffisantes pour éviter une résistance trop importante, et ce faisant réduire la perte ohmique affectant la tension au borne de la génératrice. A cet effet, la hauteur des spires (que l'on peut aussi appeler « épaisseur ») est de préférence plus importante que leur largeur. La hauteur des spires est par exemple comprise entre 3 et 10 microns, de préférence entre 5 et 10 microns.

Les aimants 33 peuvent être des aimants discrets fixés sur les flasques, par exemple par collage. Ils peuvent aussi être constitués par des portions aimantées des flasques.

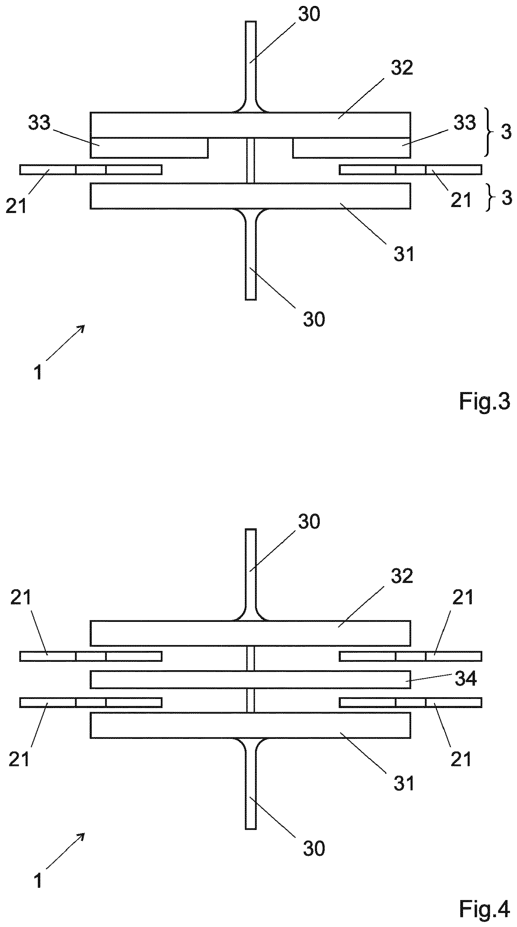

La figure 3 décrit un autre mode de réalisation de l'invention dans lequel seule la flasque supérieure 32 du rotor 3 est munie d'aimants permanents 33 ; la flasque inférieure 31 est dépourvue de tels aimants. Cette disposition permet de réduire encore l'épaisseur totale de la microgénératrice. La faible distance entre les deux flasques 31, 32 permet de garantir qu'une large portion du flux magnétique généré par les aimants 33 traverse les bobines 21 et la flasque inférieure, même si cette flasque est dépourvue d'aimants. Ainsi les flux parasites sont réduits et le rendement reste important.

Il est aussi possible d'inverser cette disposition et de ne prévoir des aimants permanents que sur la flasque inférieure 31, mais pas sur la flasque supérieure 32.

La figure 4 illustre un mode de réalisation dans lequel le stator 2 comporte au moins deux substrats séparés l'un de l'autre par une flasque rotorique intermédiaire 34, chaque substrat comportant des bobines 21. Chacune des trois flasques rotoriques 31, 32, 34 peut être munie d'aimants permanents non représentés. Les bobines de même phase sur les différents substrats statoriques peuvent être connectés en série et/ou en parallèle, de manière à augmenter le courant et/ou la tension générés.

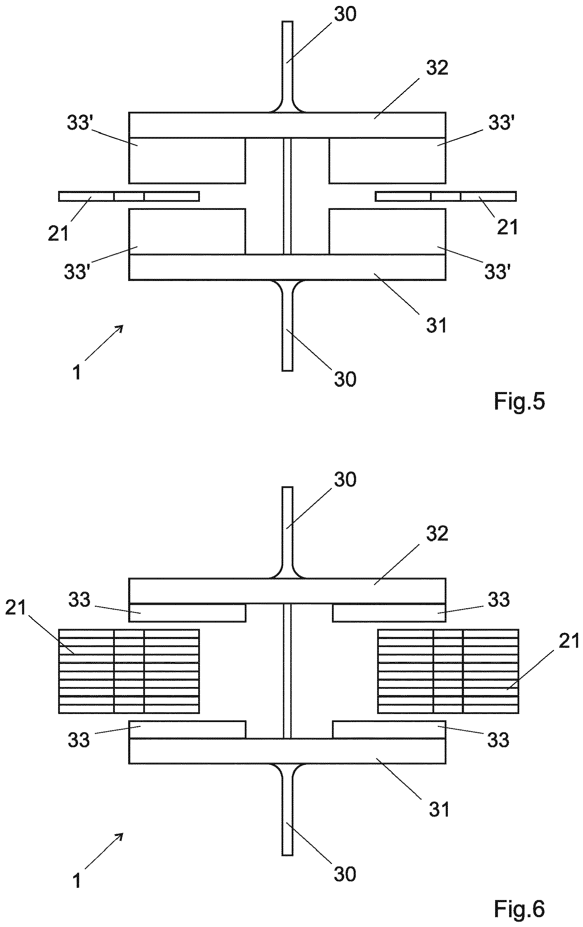

La figure 5 illustre un mode de réalisation correspondant à celui de la figure 2, mais dans lequel des aimants permanents 33' plus épais sont utilisés afin d'augmenter l'intensité du champ magnétique généré dans les bobines 21 du stator. Dans cet exemple, les aimants permanents ont une épaisseur comprise entre 0,3 et 0,6 mm, de préférence entre 0,4 et 0,5 mm. Cela permet d'obtenir une microgénératrice d'épaisseur comprise entre 1,5 et 1,8 mm, soit sensiblement équivalente à l'épaisseur de la microgénératrice sur la figure 1, mais avec des aimants permanents nettement plus puissants et donc un courant induit plus important.

La figure 6 illustre un autre mode de réalisation de microgénératrice selon l'invention. Dans cet exemple, le stator 2 comporte plusieurs bobines 21 empilées les unes sur les autres et connectées en série et/ou en parallèle afin d'augmenter le courant et/ou la tension induite. Dans un mode de réalisation, le stator comporte N couches de bobines, chaque couche comportant par exemple 6 bobines. Chacune des bobines 21 ou chacune des couches de bobines est réalisée par électrodéposition sur son propre substrat, par exemple sur un wafer.

Il est aussi possible d'utiliser une partie des bobines 21 pour la régulation de la vitesse du rotor (en modifiant leur impédance de sortie selon l'avance du rotor, tandis que d'autres bobines sont uniquement utilisées pour générer le courant d'alimentation du circuit électronique. Les circuits et procédés décrits dans la demande susmentionnée WO2014090830 peuvent être mis en oeuvre à cet effet.

L'inductance peut encore être augmentée en prévoyant un noyau ferromagnétique au centre des bobines. On renoncera cependant à ce noyau s'il crée un couple de positionnement indésirable.

Nous allons maintenant décrire plus en détail à l'aide des figures 8A à 8T un exemple de procédé qui peut être mis en oeuvre pour la réalisation des bobines par déposition sur un substrat.

La figure 8 illustre les principales étapes d'un procédé de fabrication de stator. Seule deux couches et deux spires sont représentées en coupe dans cette figure. Une bobines complète comporte cependant un nombre de spires plus important et un nombre de couches plus important.

Sur la figure 8A, un wafer de silicium 210 est prévu comme substrat. Une couche 211 d'aluminium ou d'un autre matériau de moins d'un micron est déposée par pulvérisation (sputtering) sur la figure 8B. Au lieu d'aluminium, du SiO2 peut être utilisé pour réaliser la couche 211. Cette couche 211 est ensuite recouverte d'une couche de plusieurs microns d'isolant 212, par exemple de polyimide, plus épaisse, qui servira de moule pour la réalisation de la première couche de la bobine (figure 8C). Une autre couche de protection 213, par exemple de SiO2, est déposée sur cette couche de polyimide au cours de l'étape 8D. Une couche de résine photosensible 214 est ensuite déposée sur la couche 213 (8E); le masque de photolithographie épargne une zone en forme de spirale dont la forme correspond à celle d'une spire de la bobine 21, comme illustré par exemple sur la figure 7.

Les couches 213 et 214 servent simplement à graver la couche d'isolant 212.

Au cours de l'étape 8F, la couche de protection 213 est gravée à travers les épargnes de la couche de résine photosensible 214. La résine 214 est ensuite retirée (« strippée »). Puis la couche 212 est gravée, de manière à obtenir des sillons 2120, 2121 dans lequel une couche de la bobine pourra être déposée. Les couches de protection 213 et de résine 214 sont ainsi enlevées, avant la pulvérisation d'une couche conductrice 215 sur ce motif 212 (étape 8G). Cette couche est destinée à servir de cathode pour l'étape suivante d'électrodéposition. Elle peut comporter une sous-couche de tantale et une sur-couche de cuivre.

Une couche conductrice épaisse 216, par exemple une couche de cuivre, est déposée par électrodéposition au cours de l'étape 8H de manière à remplir les sillons 2120, 2121. L'électrodéposition comprend une déposition de cuivre ou d'un autre métal conducteur au moyen d'un courant électrique inférieur à 0.5 ampère pour améliorer l'uniformité du dépôt. Le métal à déposer peut être dissous comme électrolyte sous forme de sel métallique ou de cations dans un solvant puis se déposer sur la couche 215 formant la cathode. L'excédent de cuivre et la couche d'accrochage hors des sillons 2120, 2121 est retiré par polissage mécanique et/ou chimique au cours de l'étape 8I.

Cet empilement est ensuite recouvert d'une couche d'isolant 217, par exemple du SiO2 déposé par pulvérisation cathodique (que l'on peut aussi appeler « sputtering ») (8J). L'isolant 217 permet d'isoler les différentes couches de spire formant la bobine les unes des autres. Une couche de résine photosensible 218 est ensuite déposée par photolithographie au cours de l'étape 8K par-dessus cet isolant. Le masque de photolithographie détermine les ponts électriques entre la couche de bobine 216 qui vient d'être réalisée et la couche qui va être réalisée juste au-dessus. Dans l'exemple illustré, une épargne est prévue au-dessus de la portion de bobine 216, afin de réaliser un pont électrique à cet endroit, mais pas au-dessus de la portion 2121.

La couche d'isolant 217 sous les épargnes de résine photosensible 218 est attaquée au moins partiellement au cours de l'étape 8L. Une couche d'isolant 217' (non représentée), par exemple une couche de 200nm, est ensuite déposée par sputtering.

Dans une variante, un lift-off de métal (aluminium par exemple) est réalisé avant le dépôt de la couche 217, ce qui évite par la suite le dépôt de la couche 217'.

Une deuxième couche épaisse d'isolant 219, par exemple de polyimide, est ensuite déposée au cours de l'étape 8M, puis recouverte d'une fine couche de protection 220, par exemple de SiO2, au cours de l'étape 8N.

Le tracé de la deuxième couche de bobine est déterminé au cours de l'étape 80 par les épargnes dans une couche supplémentaire de résine photosensible 221 déposée sur la couche 220. Comme précédemment la couche 212 au cours de l'étape 8F, la couche 220 et la couche de polyimide 219 sont attaquées au travers de ces épargnes au cours de l'étape 8P par gravure plasma afin de creuser de nouveaux sillons 2190 et 2191 en forme de spirale pour la deuxième couche de bobine par-dessus la première couche 216.

Un faisceau ionique est ensuite utilisé au cours de l'étape 8Q pour retirer la couche 220 et le solde de la couche isolante 217' au-dessus de l'emplacement 2120 prévu pour un pont vertical.

Une couche conductrice supplémentaire 222, par exemple une couche de cuivre sur une sous-couche d'accrochage, est déposée sur cet empilement par sputtering au cours de l'étape 8R, avant de remplir les sillons 2190 et 2191 avec un matériau conducteur 223, par exemple du cuivre, déposé par électrodéposition sur la couche 222 servant de cathode (étape 8S). L'excédent de cuivre est retiré par polissage chimique et mécanique au cours de l'étape 8T. La deuxième couche de bobine 223 est ainsi réalisée, et reliée électriquement à la première couche au travers du pont vertical à l'emplacement 2120.

Le procédé ci-dessus est ensuite répété pour obtenir le nombre de couches de bobines statoriques désiré, par exemple entre 3 et 20 couches.

D'autres moyens technologiques peuvent être mis en oeuvre en remplacement des étapes 8J à 8Q afin de créer des ponts verticaux conducteurs entre couches de spires.

Comme mentionné, une couche d'aluminium peut être déposée par évaporation à l'emplacement de chaque pont vertical, afin d'établir une liaison électrique entre deux couches.

Plusieurs bobines 21 peuvent être réalisées sur un seul wafer 210. Toutes les bobines d'un stator peuvent être réalisées sur un seul wafer 210. Il est aussi possible de réaliser plusieurs bobines appartenant à plusieurs stators sur un seul wafer, puis de les séparer par gravure plasma ou une autre méthode de découpe de wafer.

Dans un autre mode de réalisation préféré, les spires sont créés par un procédé de lift-off, ou en recourant à un procédé soustractif, par lequel les couches conductrices destinées à former les spires sont déposées dans un premier temps par un dépôt physique (sputtering ou évaporation), puis mise en forme de spires par une gravure sélective à l'aide d'une épargne obtenue par photolithographie. Le terme « procédé de lift-off » et couramment utilisé en microtechnique et correspond à une méthode pour créer des structures (« patterning ») d'un matériau cible sur la surface d'un substrat (par exemple un wafer) en utilisant un matériau de sacrifice (par exemple une résine photosensible).

Dans un autre mode de réalisation, le stator est fabriqué sur la base de la technologie thin-film avec une résolution plus grande ou égale à 10 micron. Une telle fabrication comporte les étapes d'un dépôt uniforme d'une matière sur une surface, en particulier un substrat, et d'un enlèvement sélectif de cette matière afin de créer des spires et/ou une bobine.

Dans un autre mode de réalisation, la création de la microgénératrice est réalisé au moins en partie par un empilement de films polyimides comportant un motif correspondant aux spires, avec un via entre les couches.

La couche de substrat 210 peut être amincie après ces étapes de déposition, afin de réduire l'épaisseur totale des bobines ainsi réalisées.

## Revendications

1. Microgénératrice (1) pour pièce d'horlogerie, la microgénératrice (1) comportant un rotor (3) avec au moins un aimant permanent (33, 33') et un stator (2) avec au moins une bobine (21) comportant une déposition de matière conductrice (212, 223) sur un substrat, ledit substrat (210) comportant une portion d'un wafer de silicium,
**caractérisée en ce que** ladite bobine (21) comporte plusieurs couches de matière conductrices superposées (212, 223) sur ledit wafer et séparées les unes des autres par une ou plusieurs couches isolantes (217).

2. Microgénératrice selon la revendication 1, ladite couche isolante (217) incluant du SiO2.

3. Microgénératrice selon l'une des revendications 1 ou 2, comportant au moins un pont électriquement conducteur pour relier deux couches au travers de ladite couche isolante (217).

4. Microgénératrice selon l'une des revendications 1 à 3, chaque bobine (21) comportant au moins une spire, la largeur desdites spires étant inférieure à 5 microns, leur espacement étant inférieur à 5 microns, l'épaisseur totale dudit stator (3) étant inférieure à 0,1 mm.

5. Microgénératrice selon la revendication 4, le stator (2) comportant entre 3 et 10 couches de spires superposées, l'épaisseur de chaque spire étant inférieure à 10 microns.

6. Microgénératrice selon l'une des revendications 1 à 5, l'épaisseur dudit aimant permanent (33') étant comprise entre 0,3 et 0,7mm.

7. Microgénératrice selon l'une des revendications 1 à 6, le rotor (3) comprenant deux flasques (31, 32), une seule desdites flasques (32) étant munie dudit aimant permanent.

8. Microgénératrice selon l'une des revendications 1 à 7, ledit stator (2) comportant au moins deux dits substrats avec une pluralité de bobines (21) sur chaque substrat, ledit rotor (3) comportant au moins une flasque (34) avec une pluralité d'aimants permanents entre deux substrats.

9. Microgénératrice selon l'une des revendications 1 à 8, comportant une pluralité de bobines (21) superposées, chaque bobine comportant un substrat et plusieurs spires empilées sur ce substrat, lesdites bobines (21) étant reliées entre elles en parallèle et/ou en série.

10. Microgénératrice selon l'une des revendications 1 à 9, lesdites spires ayant une forme de segment annulaire.

11. Microgénératrice selon l'une des revendications 1 à 10, comportant plusieurs bobines déphasées juxtaposées sur un même substrat.

12. Procédé de fabrication d'une bobine pour microgénératrice (1) selon l'une des revendications précédentes,
**caractérisée par** une étape de déposition sur une portion en silicium d'un wafer d'un substrat (210) de plusieurs couches de matière conductrices superposées (212, 223) et séparées les unes des autres par une ou plusieurs couches isolantes (217).

13. Procédé selon la revendication 12, comportant la réalisation par photolithographie d'un sillon (2120, 2121, 2190, 2191) dans lequel ladite matière conductrice est déposée.

14. Procédé selon la revendication 13, comportant la réalisation successive de plusieurs couches de bobines superposées par déposition successive de matière conductrice dans plusieurs sillons superposés.

15. Mouvement de montre comprenant une microgénératrice selon l'une des revendications 1 à 11.
